# EUROPÄISCHE PATENTANMELDUNG

(11) **EP 2 799 125 A1**
(43) Veröffentlichungstag der Anmeldung: **05.11.2014**
(21) Anmeldenummer: 14172072.2
(22) Anmeldetag: 26.02.2009
(51) Int. Cl.: B01D 46/00, B01D 46/24, B01D 46/52

(54) **Dichtungskonfiguration**

(30) Priorität: 26.02.2008 DE 102008011186; 23.12.2008 DE 102008062956
(62) Teilanmeldung aus: 09713733.5
(71) Anmelder: MANN + HUMMEL GMBH, 71638 Ludwigsburg (DE)
(72) Erfinder: Münkel, Karlheinz, 75038 Oberderdingen-Flehingen (DE); Kolczyk, Markus, 74395 Mundelsheim (DE); Becker, Stefan, 68305 Mannheim (DE); Heim, Dr. Michael, 71691 Freiberg (DE)

(57) **Zusammenfassung**

Filterelement und Luftfilter für eine Brennkraftmaschine mit einer optimierten Dichtungskonfiguration durch vorsehen einer Sicherung gegen einen Falscheinbau eines Filterelementes in ein Luftfiltergehäuse.

## Beschreibung

### Gebiet der Erfindung

Die vorliegende Erfindung bezieht sich auf ein Filterelement bzw. einen Luftfilter, und insbesondere auf ein Filterelement und einen Luftfilter für eine Brennkraftmaschine mit einer optimierten Dichtungskonfiguration.

### Hintergrund der Erfindung

Die für Brennkraftmaschinen benötigte Verbrennungsluft wird in der Regel vor dem Zuführen in den Verbrennungsraum gereinigt, um die Leistungsfähigkeit und die Lebensdauer der Brennkraftmaschine zu erhöhen. Dabei wird für die Reinigung der Verbrennungsluft in der Regel eine Luftfilteranordnung verwendet. Dies ist insbesondere für Brennkraftmaschinen von Bedeutung, die in einer Umgebung arbeiten, die einer besonderen Verschmutzungsbelastung der Umgebungsluft ausgesetzt sind, so wie beispielsweise im Bereich des Baugewerbes bzw. der Landwirtschaft. Insbesondere im Bereich des Baugewerbes bzw. in der Landwirtschaft tritt eine mitunter sehr hohe Staubbelastung auf, die eine Reinigung der Verbrennungsluft notwendig macht. Aufgrund der Tatsache, dass das Spektrum der Staubpartikelgröße im Regelfall vorher nicht bekannt ist, muss eine Luftfilteranordnung so ausgestaltet sein, dass sämtliche Partikelgrößen, die den Betrieb der Brennkraftmaschine in irgendeiner Weise beeinflussen können, zuverlässig herausgefiltert werden können, um eine Zuführung hinreichend sauberer Verbrennungsluft zu der Brennkraftmaschine zu ermöglichen.

Insbesondere im Bereich von Brennkraftmaschinen, die auf bzw. in Fahrzeugen zum Einsatz kommen, ist die Ausgestaltung eines effizienz- und platzoptimierten Luftfiltersystems unerlässlich, um die Abmessungen gering zu halten, und auf der anderen Seite eine dennoch hohe Effizienz der Luftfilteranordnung zu ermöglichen.

Aus beispielsweise EP 1 364 695 A1 ist ein Luftfilter bekannt, der in den Ansaugtrakt einer Brennkraftmaschine integriert ist, um die den Zylindern der Brennkraftmaschine zuzuführende Verbrennungsluft einer Filtration zu unterziehen. Der Luftfilter ist im Wesentlichen dreiteilig aufgebaut und umfasst in einem Filtergehäuse ein Filterelement, welches als auswechselbare Filterpatrone ausgebildet ist, die axial von der Verbrennungsluft durchströmt wird und radial über einen verschließbaren Deckel in das Filtergehäuse einsetzbar ist. Der Filterpatrone ist ein ZykIon-Vorabscheider vorgeschaltet, der zur Abscheidung von groben Schmutzpartikeln dient. Stromab der Filterpatrone befindet sich ein Sekundär- bzw. Feinfilterelement, das ebenfalls radial bei geöffnetem Deckel in das Filtergehäuse einsetzbar ist. Der Zyklon-Vorabscheider, die Filterpatrone und das Feinfilterelement liegen axial hintereinander und werden ohne Umlenkung der zu reinigenden Verbrennungsluft in Achsrichtung durchströmt.

### Zusammenfasung der Erfindung

Der Erfindung liegt die Aufgabe zugrunde, ein Filterelement bzw. einen Luftfilter bereitzustellen mit einer optimierten Dichtungskonfiguration zur Erhöhung der Betriebssicherheit.

Die Aufgabe der vorliegenden Erfindung wird gelöst durch den Gegenstand der unabhängigen Ansprüche, wobei weitergebildete Ausführungsformen in den unabhängigen Ansprüchen verkörpert sind.

Gemäß einer beispielhaften Ausführungsform der Erfindung wird ein Filterelement für einen Luftfilter einer Brennkraftmaschine bereitgestellt, wobei das Filterelement eine Ausdehnung in eine im wesentlichen axiale Ausdehnungsrichtung und eine Ausdehnung in eine im wesentlichen dazu orthogonal verlaufende Ebene in radialer Ausdehnungsrichtung aufweist, wobei das Filterelement ein Filtermedium mit einer Rohgasseite und einer Reingasseite aufweist, und das Filterelement eine Dichtungsanordnung aufweist mit einer ersten Anlagefläche, die ausgelegt ist zur fehlluftundurchlässigen Trennung der Reingasseite von der Rohgasseite bezüglich einer Luftfiltergehäusewand, wobei die erste Anlagefläche umlaufend ist und eine Geometrie aufweist, die eine einen Fehleinbau verhindernde Unsymmetrie bezüglich der axialen Ausdehnungsrichtung aufweist.

Auf diese Weise kann ein Filterelement bereitgestellt werden, bei dem durch Vorsehen einer Unsymmetrie eine unsachgemäße Bedienung, insbesondere ein unsachgemäßer Einbau in ein Luftfiltergehäuse verhindert werden kann bzw. dem Bediener ermöglicht wird, einen Fehleinbau zu erkennen, bzw. einen Fehleinbau zu verhindern. Das Verhindern eines fehlerhaften Einbaus eines Filterelementes in ein Luftfiltergehäuse kann eine Fehlfunktion des Luftfilters vermeiden. Ferner kann sicher gestellt werden, dass die Dichtungskonfiguration von zugehörigen Anlageflächen ordnungsgemäß zusammenpasst und dadurch Fehlluftströme vermieden werden, die an dem Filterelement vorbei das Luftfiltergehäuse durchströmen. Auf diese Weise können ernsthafte Schäden an einer Brennkraftmaschine verhindert werden, die durch für die Brennkraftmaschine schädliche Partikel hervorgerufen werden können, die durch den Luftfilter herausgefiltert werden sollen. Insbesondere kann vermieden werden, dass derartige Partikel das Luftfiltergehäuse ungefiltert passieren und somit in den Brennraum einer Brennkraftmaschine gelangen. Ferner kann vermieden werden, dass durch einen Fehleinbau eines Filterelementes in einem Luftfiltergehäuse auch das Filterelement beschädigt wird oder der Wirkungsgrad des Filterelementes vermindert wird. Insbesondere bei Geometrien in einem Luftfiltergehäuse bzw. einem Filterelement, die aufeinander abgestimmt sind, kann ein Fehleinbau ansonsten die gesamte Strömungssituation in einem Luftfiltergehäuse derart verändern, dass der Luftfilter nicht mehr in der beabsichtigen Art und Weise durchströmt wird, und daher beispielsweise bestimmte Bereiche eines Filterelementes stärker als beabsichtigt an- bzw. durchströmt werden und im Gegensatz dazu andere Bereiche des Filterelementes kaum oder gar nicht durchströmt werden. Durch die Verhinderung eines Fehleinbaus kann eine sehr ungleichmäßige Belastung des Filterelements verhindert werden, die insbesondere auftreten kann, wenn sich zu stark belastete Bereiche schnell mit dem Filtrat zusetzen und sich aufgrund dessen auch die Strömungssituation im Luftfilter massiv verändert. Insbesondere können Strömungswiderstände erheblich verändert werden, sodass nicht nur die Leistungsfähigkeit des Luftfilters beeinträchtig wird, sondern ebenfalls die Leistungsfähigkeit der Brennkraftmaschine, da diese nicht mehr die benötigte Luftmenge zur Verfügung gestellt bekommt. Darüber hinaus kann durch die Vermeidung eines falschen Einbaus eines Filterelementes in einem Luftfiltergehäuse erreicht werden, dass das Filtermedium des Filterelementes in der beabsichtigten Art und Weise angeströmt wird, und nicht mechanisch durch eine Luftströmung unter Umständen verformt oder sogar zerstört wird. So kann im gleichen Zuge die Leistungsfähigkeit und die Zuverlässigkeit des Filterelementes und damit des gesamten Luftfilters sicher gestellt werden. Durch eine unsymmetrische Anlagefläche einer an dem Filterelement angeordneten Dichtungsanordnung kann ferner für die Bedienperson, die das Filterelement in dem Filtergehäuse auswechselt, spürbar gemacht werden, ob und dass das Filterelement korrekt in das Luftfiltergehäuse eingesetzt wurde bzw. dass eventuell ein Fehleinbau vorliegt, der durch die Bedienperson unmittelbar korrigiert werden kann.

Eine Dichtungsanordnung kann dabei sowohl eine im Wesentlichen starre Anlagefläche als auch eine im Wesentlichen flexible Anlagefläche sein. Dabei ist unter einer flexiblen Anlagefläche eine Anlagenfläche zu verstehen, die sowohl bei einem Gegendruck einer starren als auch bei einem Gegendruck einer flexiblen Anlagefläche verformbar ist. Die Verformung kann einerseits sowohl plastisch bzw. nicht-selbstzurückstellend sein, und andererseits auch elastisch bzw. selbstzurückstellend sein.

Gemäß einer beispielhaften Ausführungsform der Erfindung ist die erste Anlagefläche in einer Fläche angeordnet, deren Abstand zu einer Ebene einer Einbaurichtung in der Einbaurichtung monoton zunimmt.

Mit anderen Worten kann die erste Anlagefläche in einer zu der Einbaurichtung schräg gestellten Ebene oder einer gekrümmten Fläche angeordnet sein, sodass ein Kraftbeaufschlagen einer Anlagefläche der Dichtungsanordnung beim Einfügen des Filterelementes in ein Luftfiltergehäuse erst zu einem verhältnismäßig späten Zeitpunkt erfolgt und auf diese Weise ein Querverschieben und Aufeinanderreiben von Dichtungsflächen weitestgehend vermieden werden kann. Insbesondere bei staubbelasteten Umgebungen, bei denen nicht unwahrscheinlich ist, dass sich gewisse Partikel auch auf der Oberfläche der Dichtung ablagern, kann es von Bedeutung sein, dass ein Reiben der entsprechenden Dichtungsanlageflächen aufeinander vermieden wird, um zu verhindern, dass die auf den Dichtungsflächen abgelagerten Partikel unter Umständen durch die Reibung eine Beschädigung der Dichtungsfläche hervorrufen. Schließlich kann der Einbau durch Vermeidung einer Reibung erleichtert werden.

Gemäß einer beispielhaften Ausführungsform der Erfindung verläuft die Dichtungsanordnung in einer gekrümmten Fläche.

Durch die Anordnung der Dichtungsanordnung in einer gekrümmten Fläche kann gegenüber beispielsweise einer schräg verlaufenden Ebene eine geringere Einbautiefe erreicht werden, und zugleich ein zuverlässigen Eingreifen in eine Dichtungskonfiguration von der Einbauposition gesehen am tiefsten Punkt eines Luftfiltergehäuses sicher gestellt werden. Diese tiefliegende Position ist in der Regel durch die Bedienperson nach einem Einfügen des Dichtungselementes ohne weiteres nicht mehr einsehbar, sodass insbesondere in diesem Bereich ein zuverlässiges Eingreifen der Anlageflächen der Dichtungselemente gewährleistet sein muss. Insbesondere kann durch eine gekrümmte Ausführung der Anlagefläche verhindert werden, dass beispielsweise eine Dichtlippe unbeabsichtigter Weise umklappt, wodurch eine zuverlässige Abdichtung nicht mehr gewährleistet wäre.

Gemäß einer beispielhaften Ausführungsform der Erfindung weist die Dichtungsgeometrie ein in einer Umlaufrichtung verändertes Profil auf.

Eine derartige Veränderung des Profils in Umlaufrichtung kann beispielweise durch eine Verbreiterung der Dichtlippe oder der Anlagefläche erfolgen, ebenso wie durch eine dickere Ausgestaltung eines elastischen Dichtungselements. Darüber hinaus kann sich auch das Querschnittprofil in der Umlaufrichtung verändern, sodass insbesondere den unterschiedlichen Positionen der Dichtungselementabschnitt Rechnung getragen werden kann. Insbesondere kann das Profil von der Einbauposition gesehen in einem tieferen Bereich des Luftfiltergehäuses aus so ausgestaltet sein, dass dort eher eine radiale Kraftbeaufschlagung der Dichtungsgeometrie erfolgt, während von der Einbauposition gesehen in den mittleren und oberen Bereichen des Luftfiltergehäuses eher eine axiale Kraftbeaufschlagung der Dichtungsgeometrie erfolgen kann. Dies ermöglicht eine unterschiedliche Ausgestaltung der Dichtungsgeometrie entlang des Umfangs, insbesondere ein verändertes Profil.

Gemäß einer beispielhaften Ausführungsform der Erfindung befindet sich die Dichtungsanordnung in einem der Abströmseite zugewandten Bereich des Filterelementes.

Auf diese Weise kann auch die äußere Mantelfläche des Filterelementes als Anströmfläche verwendet werden, insbesondere wenn es sich bei dem Filterelement um einen Faltenbalgfilter handelt. Für Ausführungsformen, in denen das Filterelement ein Mehrfachfaltenbalgfilter ist, wird zudem ein weiterer Anströmkanal in der Mitte bereitgestellt. Da sich die herausgefilterten Stäube auf der Rohgasseite befinden muss auf der Rohgasseite auch große Anströmflächen bereitgestellt werden. Dies kann beispielsweise durch ein Bereitstellen von zwei Anströmkanälen auf der Rohgasseite erreicht werden. Jedoch sein angemerkt, dass sich die Dichtungsanordnung auch in einem der Anströmseite zugewandten Bereich des Filterelementes befinden kann, wobei in diesem Fall jedoch die äußere Mantelfläche im Regelfall nicht mehr für ein Anströmen zur Verfügung steht. Bei Verwendung von sogenannten Wickelfiltern bzw. Kompaktelementen oder Flötenfiltern ist dies jedoch von geringerer Bedeutung, da im Regelfall bei Kompaktelementen bzw. Wickelfiltern oder Flötenfiltern die äußere Mantelfläche nicht als Anströmfläche ausgelegt ist und eine Anströmung überwiegend über die Stirnfläche des Filterelementes erfolgt.

Gemäß einer beispielhaften Ausführungsform der Erfindung weist das Filterelement in einer Ebene der radialen Ausdehnungsrichtung einen ersten im Wesentlichen geraden Abschnitt und einen zweiten im Wesentlichen geraden Abschnitt auf, wobei der erste im Wesentlichen gerade Abschnitt und der zweite im Wesentlichen gerade Abschnitt in der Ebene der radialen Ausdehnungsrichtung aufeinander zulaufen.

Auf diese Weise ist es möglich, das Filterelement in ein Luftfiltergehäuse einzusetzen, ohne dass insbesondere bei einer radialen Abdichtung die im Wesentlichen geraden Abschnitte frühzeitig eine Kraftbeaufschlagung durch die entsprechenden Dichtflächen des Luftfiltergehäuses erfahren. Dadurch kann insbesondere bei einer Staub- oder Partikelablagerung auf den Dichtflächen ein langer Reibungsweg zwischen den Dichtflächen im Wesentlichen vermieden werden, sodass eine Beschädigung der Dichtungsgeometrie unterbleibt. Ferner kann durch diese keilförmige Ausgestaltung des Filterelementes ein leichtes und einfaches Eindrücken des Filterelementes in das Luftfiltergehäuse erreicht werden. Bei einer radialen Abdichtung kann dann beispielsweise durch einen Luftfiltergehäusedeckel eine entsprechende radiale Abdichtung in Richtung der Einführungsöffnung hergestellt werden.

Gemäß einer beispielhaften Ausführungsform der Erfindung weist das Filterelement eine formwahrende Schale auf, die sich wenigstens teilweise in der Ebene der radialen Ausdehnungsrichtung über die abströmseitige Stirnfläche des Filterelementes erstreckt und sich wenigstens teilweise in axialer Richtung über die äußere Mantelfläche des Filterelementes erstreckt.

Eine derartige formwahrende Schale kann zum einen als Stoß- bzw. Kantenschutz dienen, jedoch auch die Dichtungsanordnung aufnehmen, um eine definierte Dichtungsgeometrie bereitzustellen. Darüberhinaus können an der formwahrenden Schale auch strömungsleitende Vorrichtungen wie beispielsweise Luftleitbleche vorgesehen sein, um im Inneren des Luftfiltergehäuses zusammen mit dem Filterelement eine optimierte Strömungsgeometrie bereitstellen zu können. Wenn beispielsweise das Filterelement in Form eines Mehrfachbalgfilters bereitgestellt wird, kann sich die formwahrende Schale auch beispielsweise über die gesamte Faltentiefe eines äußeren Faltenbalges erstrecken, wodurch sich jedoch unter Umständen die effektive Anströmfläche eines Anströmkanales vermindern kann. Für Filterelemente, die konstruktiv so ausgelegt sind, dass sie nicht auf eine Anströmfläche an der äußeren Mantelfläche angewiesen sind, beispielsweise Wickelfilter oder Kompaktelemente, kann sich die formwahrende Schale auch über die gesamte Mantelfläche erstecken.

Gemäß einer beispielhaften Ausführungsform ist die Dichtungsanordnung an der formwahrenden Schale vorgesehen.

Auf diese Weise kann die Formstabilität der formwahrenden Schale dazu verwendet werden, die Dichtungsanordnung bezüglich ihrer Lage und Geometrie zu stabilisieren, sodass diese sich nicht unbeabsichtigt verformt. Die formwahrende Schale kann dabei in ihrem Profil auch entlang des Umfangs des Filterelementes variieren, sodass beispielsweise eine schrägstehende Dichtungsanordnung an der formwahrenden Schale realisiert werden kann. Dies ist insbesondere für Ausführungsformen relevant, in denen die Dichtungsanordnung auf einer geneigten Ebene oder einer gekrümmten Fläche angeordnet ist, um beispielsweise ein Querverschleifen der Dichtungsflächen zu vermeiden.

Gemäß einer beispielhaften Ausführungsform der Erfindung ist die erste Anlagefäche der Dichtungsanordnung elastisch verformbar.

In der Regel wird ein Filterelement in einem Luftfiltergehäuse im Laufe der Lebensdauer eines Luftfilters mehrfach ausgewechselt, sodass die Dichtungsgeometrie seitens des Luftfiltergehäuses im Regelfall einen längeren Lebenszyklus aufweist als die Dichtungsgeometrie an einem Filterelement. Da in der Regel elastisch verformbare Dichtungsanordnungen empfindlicher gegen Beschädigungen sind, ist es von Bedeutung, dass die beschädigungsempfindlichere Dichtungsgeometrie, hier die am Filterelement vorgesehene elastisch verformbare Dichtungsanordnung, einem häufigeren Wechsel und einer besseren Austauschbarkeit unterliegen. Insbesondere bei einer Beschädigung der Dichtungsanordnung bzw. der gesamten Dichtungsgeometrie, die sich im Regelfall an dem elastisch verformbaren Teil einer Dichtungskonfiguration einstellt, ist es wesentlich einfacher und kostensparender, wenn lediglich das Filterelement ausgetauscht werden muss anstelle eines Komplettaustausches eines Luftfilters. Der Austausch eines Luftfilters kann darüberhinaus im Regelfall nur von Fachpersonal durchgeführt werden, während das Filterelement selbst auch vom Betreiber oder einer Bedienperson einer entsprechenden Brennkraftmaschine durchgeführt werden kann.

Gemäß einer beispielhaften Ausführungsform der Erfindung weist die erste Anlagefläche ein konkaves Dichtungsprofil mit gegenüberliegenden Seiten auf.

Ein derartiges Dichtungsprofil erlaubt die Aufnahme einer korrespondierenden Dichtungsfläche beispielsweise in Form eines Steges derart, dass ein verhältnismäßig langes Fadenmaß zur Querung der Dichtungsfläche bereitgestellt wird. Dadurch verbessern sich die Dichtungseigenschaften der Dichtungsanordnung im Allgemeinen. Insbesondere erlauben gegenüberliegende Seiten eines konkaven Dichtungsprofils eine verbesserte Positionierbarkeit und darüber hinaus eine selbststabilisierende Halterung des Filterelementes in einem Luftfiltergehäuse.

Gemäß einer beispielhaften Ausführungsform der Erfindung weist mindestens eine der gegenüberliegenden Seiten wenigstens eine vorstehende Rippe in Umlaufrichtung auf.

Auf diese Weise kann ein Selbsthalteeffekt der konkaven Dichtungsanordnung mit einer korrespondierenden Dichtungsfläche eines Luftfiltergehäuses erreicht werden, insbesondere wenn die vorstehende Rippe eine gewisse Elastizität und Nachgiebigkeit aufweist, die ein Einklemmen einer vorstehenden Kante bzw. eines Steges einer Dichtungsgeometrie seitens des Luftfiltergehäuses erlaubt. Bei einem Vorsehen von mehreren vorstehenden Rippen in Umlaufrichtung können darüber hinaus mehrere umlaufende Dichtungslinien bereitgestellt werden, die eine fehlluftdichte Trennung von Rohgasseite und Reingasseite verbessern. Darüberhinaus wird auch ein Selbsthalteeffekt durch ein Aufstecken und ein Einklemmen zwischen den vorstehenden Rippen verbessert.

Gemäß einer beispielhaften Ausführungsform der Erfindung verläuft eine Andruckrichtung der ersten Anlagefläche im Wesentlichen senkrecht zu einer Einbaurichtung, in der das Filterelement in ein Filtergehäuse einbaubar ist.

Insbesondere bei einer Einbaurichtung quer zur Durchströmungsrichtung kann auf diese Weise eine umlaufende nicht unterbrochene Dichtungsfläche sowohl in dem Luftfiltergehäuse als auch an dem Filterelement bereitgestellt werden, sodass zwei definierte Dichtungsflächen aufeinanderstoßen, die eine fehlluftdichte Trennung von Reingasseite und Rohgasseite gewährleisten. Durch eine Auflagefläche am Filterelement, die in eine abströmseitige Richtung gerichtet ist und eine korrespondierende Anlagefläche des Luftfiltergehäuses, die in eine anströmseitige Richtung gerichtet ist, kann der Anpressdruck durch die betriebsbedingte Luftströmung noch erhöht werden und so die Dichtsituation verbessert werden.

Gemäß einer beispielhaften Ausführungsform der Erfindung weist das Filterelement eine bezüglich des Filterelementes von einer ersten Bewegungsposition in eine zweite Bewegungsposition verbringbare Kraftbeaufschlagungsvorrichtung auf, wobei die Kraftbeaufschlagungsvorrichtung in der ersten Bewegungsposition derart ausgelegt ist, dass sie ein Einführen des Filterelementes in ein Filtergehäuse erlaubt und die Kraftbeaufschlagungsvorrichtung in der zweiten Bewegungsposition derart ausgelegt ist, dass sie abgestützt gegen das Luftfiltergehäuse eine Kraftbeaufschlagung der Dichtungsanordnung des Filterelementes auf eine Dichtungsanordnung eines Luftfiltergehäuses hervorruft.

Auf diese Weise kann ein Filterelement beispielsweise quer zu der Strömungsrichtung in ein Luftfiltergehäuse eingebracht werden, während sich die Kraftbeaufschlagungsvorrichtung in einer ersten Bewegungsposition befindet. Durch eine Betätigung der Kraftbeaufschlagungsvorrichtung in eine zweite Bewegungsposition können entsprechende Kräfte abgestützt gegen das Luftfiltergehäuse aufgebracht werden, um die Auflagefläche einer Dichtungsanordnung des Filterelementes dann an eine korrespondierende Dichtungsfläche des Luftfiltergehäuses zu pressen. Auf diese Weise kann das Filterelement zuerst ohne großen Kraftaufwand in die beabsichtigte Position des Luftfiltergehäuses eingebracht werden, und erst dann eine entsprechende Kraftbeaufschlagung erfolgen, die eine Kraft auf die entsprechende Dichtungskonfiguration ausübt, um die Reingasseite und die Rohgasseite fehlluftdicht voneinander zu trennen.

Gemäß einer beispielhaften Ausführungsform der Erfindung ist die Kraftbeaufschlagungsvorrichtung schwenkbar um eine Schwenkachse an dem Filterelement befestigt und weist eine Fläche zur Kraftbeaufschlagung gegen ein Luftfiltergehäuse auf, wobei die Fläche zur Kraftbeaufschlagung bei einer Schwenkbewegung eine exzentrische Bewegung bezüglich der Schwenkachse vollzieht.

Auf diese Weise wird durch das Vorsehen eines Exzenters eine Andruckkraft auf die Dichtungsanordnung bereitgestellt, sodass gewisse Hebelwirkungen ausgenutzt werden können, um mit einem verhältnismäßig geringen Kraftaufwand einen hohen Anpressdruck auf die Dichtungsanordnung zu erreichen. Durch die exzentrische Ausgestaltung der Andruckfläche bezüglich einer Schwenkachse erfolgt eine Erhöhung der Kraft durch eine Art Keilwirkung. Die Fläche zur Kraftbeaufschlagung kann dabei so gebogen sein, dass die Kraftbeaufschlagung im Wesentlichen mit einer kontinuierlichen Kraft erfolgen kann. Darüberhinaus kann die Fläche zur Kraftbeaufschlagung so ausgestaltet sein, dass sie eine gewisse Schwelle aufweist, über die die Kraftbeaufschlagungsvorrichtung hinwegbewegt werden muss, um einen ordnungsgemäßen Kraftandruck auf die Dichtungsgeometrie zu erreichen. Insbesondere stellt das Überschreiten einer derartigen Schwelle für die Bedienperson ein wahrnehmbares Zeichen dar, dass ein ordnungsgemäßes Einbringen des Filterelementes in das Luftfiltergehäuse bzw. eine ordnungsgemäße Kraftbeaufschlagung der Dichtungsgeometrie erfolgt ist.

Gemäß einer beispielhaften Ausführungsform der Erfindung weist die Kraftbeaufschlagungsvorrichtung einen Handgriff auf, der ausgelegt ist, um die Kraftbeaufschlagungsvorrichtung von der ersten Bewegungsposition in die zweite Bewegungsposition und umgekehrt zu bewegen, wobei der Handgriff in der ersten Bewegungsposition als Griff zum Einbau bzw., Ausbau des Filterelementes in bzw. aus einem Filtergehäuse ausgelegt ist.

Auf diese Weise kann die Kraftbeaufschlagungsvorrichtung mit dem Handgriff zugleich auch als Handhabungshilfe für den Einsetzvorgang verwendet werden, sodass der Handgriff der Kraftbeaufschlagungsvorrichtung sowohl für den Einbau als auch für die Kraftbeaufschlagung verwendet werden kann. Darüberhinaus kann der Handgriff der Kraftbeaufschlagungsvorrichtung so angeordnet sein, dass er in der ersten Bewegungsposition radial von dem Filterelement absteht, sodass eine einfache Betätigung und Handhabung auch mit Handschuhen möglich ist, während sich der Handgriff in einer zweiten Betätigungsposition bzw. Bewegungsposition derart anliegend an dem Filterelement befindet, dass er im Wesentlichen nicht mehr radial von dem Filterelement absteht, um das Einbaumaß des Filterelementes in der zweiten Betriebsposition, d.h. in der zweiten Bewegungsposition kompakt und damit auch die äußeren Abmessungen eines Luftfiltergehäuses klein zu halten.

Gemäß einer beispielhaften Ausführungsform der Erfindung weist die Dichtungsanordnung eine zweite Anlagefläche auf, die ausgelegt ist zur fehlluftundurchlässigen Trennung der Reingasseite des Filterelementes von einer Rohgasseite eines dem Filterelement nachgeschalteten Sicherheitselementes.

Auf diese Weise kann an dem Filterelement eine Dichtungsanordnung vorgesehen sein, die nicht nur eine Dichtung des Filterelementes gegenüber dem Luftfiltergehäuse bereitstellt, sondern auch eine Dichtungsanordnung für ein nachgeschaltetes Sicherheitselement. Eine derartige Dichtungsanordnung mit einer ersten Anlagefläche und einer zweiten Anlagefläche kann insbesondere auch an der formwahrenden Schale vorgesehen sein. Durch das Vorsehen von einer ersten Anlagefläche und einer zweiten Anlagefläche an der Dichtungsanordnung kann die gesamte Dichtungskonfiguration der auswechselbaren Filterelemente an im Wesentlichen einem Umfangsbereich konzentriert werden. Darüberhinaus kann ermöglicht werden, dass die unter Umständen empfindliche Dichtungsgeometrie regelmäßig ausgewechselt werden kann, insbesondere wenn diese an dem Filterelement vorgesehen wird, welches als häufig auszuwechselndes Verschleißteil bzw. Verbrauchsteil vorgesehen wird.

Gemäß einer beispielhaften Ausführungsform der Erfindung ist die zweite Anlagefläche elastisch ausgebildet und die erste Anlagefläche und die zweite Anlagefläche in einem integralen Element ausgebildet. Auf diese Weise kann eine einfache Fertigung der Dichtungsanordnung mit sowohl der ersten Anlagefläche als auch der zweiten Anlagefläche ermöglicht werden, wodurch insbesondere die verschleiß- und beschädigungsanfälligen elastischen Bereiche der ersten Anlagefläche und der zweiten Anlagefläche einer einfachen Austauschbarkeit unterliegen. Weiterhin kann die Dichtungsanordnung mit der ersten Anlagefläche und der zweiten Anlagefläche lösbar an dem Filterelement vorgesehen sein. Damit kann auch dieses integrale Element mit einer ersten Anlagefläche bzw. einer zweiten Anlagefläche separat ausgetauscht werden, oder das Filterelement alleine ausgetauscht werden, während das noch intakte integrale Element mit der ersten Anlagefläche und der zweiten Anlagefläche in dem Luftfiltergehäuse verbleibt oder zumindest auf ein neueingesetztes Filterelement auf- bzw. angebracht werden kann, bevor dieses in das Luftfiltergehäuse eingesetzt wird.

Gemäß einer beispielhaften Ausführungsform der Erfindung wird ein Luftfilter für eine Brennkraftmaschine bereitgestellt mit einem erfindungsgemäßen Filterelement, sowie einem Luftfiltergehäuse, wobei das Luftfiltergehäuse eine zu der Dichtungsanordnung des Filterelementes korrespondierende Dichtungsanordnung mit einer ersten Anlagefläche aufweist.

Gemäß einer beispielhaften Ausführungsform der Erfindung wird ein Luftfilter für eine Brennkraftmaschine bereitgestellt, wobei das Luftfiltergehäuse eine Kraftaufnahmefläche für eine Fläche zur Kraftbeaufschlagung der Kraftbeaufschlagungsvorrichtung des Filterelementes derart aufweist, dass eine gegen die Kraftaufnahmefläche des Filtergehäuses ausgeübte Kraftbeaufschlagung der Dichtungsanordnung aufnehmbar ist.

Es sollte bemerkt werden, dass die einzelnen oben beschriebenen Merkmale selbstverständlich auch untereinander kombiniert werden können, wodurch sich zum Teil auch vorteilhafte Wirkungen einstellen können, die über die Summe der Einzelwirkungen hinausgehen.

Diese und andere Aspekte der vorliegenden Erfindung werden durch die Bezugnahme auf die hiernach beschriebenen beispielhaften Ausführungsformen erläutert und verdeutlicht.

### Kurze Beschreibung der Zeichnungen

Beispielhafte Ausführungsformen werden im Folgenden mit Bezugnahme auf die folgenden Zeichnungen beschrieben.
Fig. 1 zeigt eine schematische Anordnung eines Luftfiltergehäuses mit einem darin einzusetzenden Filterelement gemäß einer beispielhaften Ausführungsform der Erfindung.
Fig. 2 zeigt eine schematische Schnittansicht eines Filterelementes und eines Luftfiltergehäuses vor dem endgültigen Einsetzen mit einer schrägstehenden bzw. geneigten Dichtungsanordnung.
Fig. 3 zeigt eine schematische Schnittansicht in einer radialen Ausdehnungsebene eines Luftfilterelementes gemäß einer beispielhaften Ausführungsform der Erfindung.
Fig. 4 zeigt eine Schnittansicht eines Filterelementes gemäß einer beispielhaften Ausführungsform der Erfindung.
Fig. 5 zeigt eine Dichtungsanordnung gemäße einer beispielhaften Ausführungsform der Erfindung.
Fig. 6 zeigt eine Profilschnittansicht einer Dichtungsgeometrie an einer formwahrenden Schale gemäß einer beispielhaften Ausführungsform der Erfindung.
Fig. 7 zeigt eine Dichtungsgeometrie gemäß einer beispielhaften Ausführungsform der Erfindung.
Fig. 8 zeigt eine beispielhafte Dichtungsgeometrie einer weiteren beispielhaften Ausführungsform der Erfindung.
Fig. 9 zeigt eine Schnittansicht eines Filterelementes gemäß einer beispielhaften Ausführungsform der Erfindung.
Fig. 10 zeigt eine Anordnung eines Filterelementes mit einer Kraftbeaufschlagungsvorrichtung gemäß einer beispielhaften Ausführungsform der Erfindung.
Fig. 11 zeigt ein Filterelement eingesetzt in einem Luftfiltergehäuse mit einer Kraftbeaufschlagungsvorrichtung gemäß einer beispielhaften Ausführungsform der Erfindung.
Fig. 12 zeigt eine Schnittansicht einer Dichtungsgeometrie mit einer ersten Anlagefläche und einer zweiten Anlagefläche gemäß einer beispielhaften Ausführungsform der Erfindung.
Fig. 13 zeigt eine weitere beispielhafte Ausführungsform einer Dichtungsgeometrie zwischen einem Filterelement, einen Luftfiltergehäuse und einem Sicherheitselement.

### Detailierte Beschreibung beispielhafter Ausführungsform der Erfindung

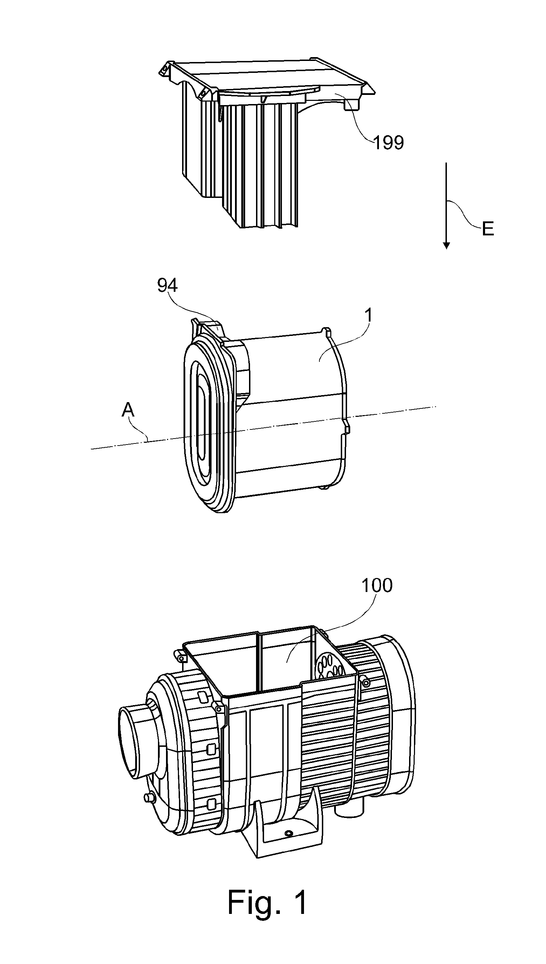

Figur 1 zeigt eine schematische Ansicht eines Luftfiltergehäuses 100 mit einem Luftfiltergehäusedeckel 199. Ferner ist ein Filterelement 1 abgebildet, das in das Luftfiltergehäuse eingesetzt wird, und zwar entlang einer Einbaurichtung E, die im Wesentlichen orthogonal zu einer axialen Ausdehnungsrichtung A verläuft, in die sich das Filterelement und auch das Luftfiltergehäuse in dieser Ausführungsform erstreckt. Entlang dieser axialen Ausdehnungsrichtung erfolgt im Regelfall auch die Durchströmung des Luftfiltergehäuses und des Filterelementes 1 durch die zu reinigende Luft bzw. ein zu reinigendes Fluid. An dem Luftfiltergehäuse sind in der hier gezeigten Ausführungsform beispielsweise Griffe oder Griffmulden 94 angeordnet, um das Filterelement in das Luftfiltergehäuse 100 einsetzen zu können bzw. das Filterelement 1 aus dem Luftfiltergehäuse 100 entnehmen zu können. Der Deckel 199 weist dabei zweckmäßigerweise eine Dichtungsgeometrie auf, mittels derer das Luftfiltergehäuse 100 fehlluftdicht verschlossen werden kann, sodass ein ordnungsgemäßer Betrieb des Luftfiltergehäuses gewährleistet ist. Darüberhinaus kann der Deckel des Luftfiltergehäuses 199 Anordnungen oder konstruktive Maßnahmen aufweisen, mittels derer das Filterelement 1 in dem Luftfiltergehäuse 100 zum einen positioniert werden kann, und zum anderen auch eine Kraftbeaufschlagung erfolgen kann, mittels derer die Dichtungen des Filterelementes und des Luftfiltergehäuses in Eingriff gebracht werden können und mit einer gewissen Kraft beaufschlagt werden können.

Das Filterelement 1 kann dabei ein sogenanntes Faltenfilterelement sein, das aus einem oder einer Mehrzahl von Faltenbälgen besteht, die beispielsweise radial ineinander angeordnet sind. Das Filterelement kann dabei sowohl oval als auch kreisrund ausgestaltet sein, ist jedoch auf diese äußeren Formen nicht beschränkt. Das Filterelement kann ebenso auch ein sogenannter Wickel- bzw. Flötenfilter in Form eines Kompaktelementes sein, der im Wesentlichen durch die Stirnseiten an- bzw. abgeströmt wird.

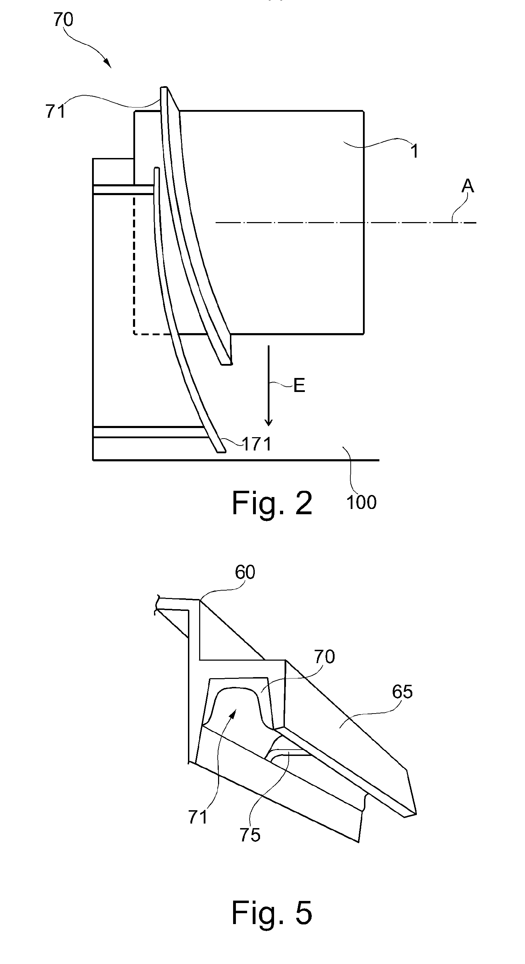

Figur 2 zeigt eine schematische Schnittansicht entlang der Längsachse bzw. der axialen Ausdehnungsrichtung A, bei der das Filterelement 1 mit einer Dichtungsanordnung 70 versehen ist, die eine Anlagefläche 71 aufweist. Das Filtergehäuse 100 weist eine korrespondierende Anlagefläche 171 auf, die mit der Anlagefläche 71 des Filterelementes 1 bei einem eingebauten Filterelement in das Filtergehäuse 100 in Eingriff kommt. Diese beiden Anlageflächen 71, 171 stellen dann eine fehlluftdichte Abdichtung einer Rohgasseite gegenüber einer Reingasseite in dem Luftfiltergehäuse 100 her. In der in Figur 2 gezeigten Ausführungsform sind die Anlageflächen bzw. die Dichtungsanordnung schräg bzw. geneigt ausgeführt. Dies ermöglicht bei einem Einbringen des Filterelementes 1 entlang einer Einführungsrichtung E, dass die Anlageflächen 71, 171 erst zu einem verhältnismäßig späten Zeitpunkt miteinander in Berührung kommen, und somit eine schleifende Bewegung der Dichtungsflächen bzw Anlageflächen 71, 171 aufeinander vermieden werden kann. Insbesondere wenn sich auf den Dichtungsflächen bzw. den Anlageflächen 71, 171 Staubpartikel oder etwa Sandkörner befinden, ist bei einem Verschleifen eine Beschädigung der Dichtungsoberflächen zu befürchten. Durch eine Schräganstellung der Dichtungsanordnung 70 kann eine derartige Beschädigung weitestgehend vermieden werden. Die Dichtungsanordnung 70 kann dabei sowohl in einer schrägstehenden Ebene angeordnet sein, ebenso jedoch in einer gewölbten Fläche, sowie es in Figur 2 dargestellt ist. Sinnvollerweise korrespondiert die Wölbung bzw. die Neigung der Fläche bzw. der Ebene der Anlagefläche 71 zu der der Anlagefläche 171. Die in Figur 2 dargestellte Neigung bzw. Krümmung kann jedoch auch sehr viel kleiner ausfallen, und hängt maßgeblich von der Elastizität einer Anlagefläche 71, 171, der Filterdimensionen, der Umweltbedingungen etc. ab. Insofern ist in Figur 2 lediglich eine schematische Darstellung gezeigt, die das Grundprinzip von schrägen bzw. gewölbten Anlageflächen verdeutlicht.

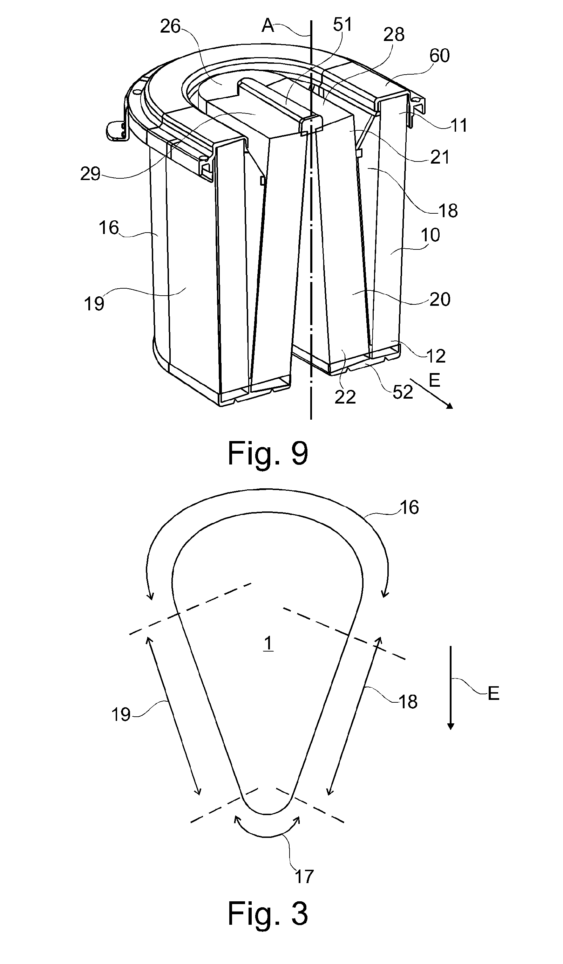

Figur 3 zeigt eine schematische Ansicht eines Schnittes durch ein Luftfilterelement in einer radialen Ausdehnungsrichtung, die im Wesentlichen orthogonal zu der axialen Ausdehnungsrichtung A verläuft. In der in Figur 3 gezeigten Ausführungsform weist das Luftfilterelement einen ersten im Wesentlichen gekrümmten Bereich 16 und einen zweiten im Wesentlichen gekrümmten Bereich 17 auf. Dazwischen befinden sich jeweils ein erster im Wesentlichen gerader Abschnitt 18 und ein zweiter im Wesentlichen gerader Abschnitt 19. Es sei an dieser Stelle verstanden, dass die im Wesentlichen geraden Abschnitte 18 und 19 ebenso auch eine Krümmung aufweisen können, die jedoch im Regelfall wesentlich geringer ist als die Krümmung des ersten bzw. zweiten gekrümmten Bereiches 16 und 17. Die hier gezeigte Anordnung, gemäß der die im Wesentlichen geraden Bereiche 18 und 19 in der hier gezeigten Ebene einer radialen Ausdehnung aufeinander zulaufen, also zueinander geneigt sind, ermöglicht es, dass Filterelement 1 in Richtung einer Einführungsrichtung E leicht in das Luftfiltergehäuse einzusetzen. Dabei wird aufgrund der keilförmigen Ausgestaltung in der entsprechenden Schnittebene ein in Kontakt bringen von entsprechenden Dichtungen entlang des Umfanges, der durch die Abschnitte 16, 17, 18 und 19 gebildet wird, zu der entsprechenden Gegendichtung in einem Luftfiltergehäuse erst verhältnismäßig spät herbeigeführt. Dadurch kann ein Aufeinanderreiben der Dichtungsflächen vermieden werden. Ein derartige geneigte Anordnung der beiden im Wesentlichen geraden Bereiche ist insbesondere bei einer radialen Abdichtung des Filterelementes gegenüber dem Luftfiltergehäuse von Bedeutung. Es sei dabei verstanden, dass die in Figur 3 gezeigte Anordnung eine stark verstärkte Neigung der im Wesentlichen geraden Abschnitte 18, 19 darstellt, wobei in der Realität diese Neigung jedoch auch sehr viel geringer ausfallen kann, je nach Gestaltungsform des Filterelementes 1. Bei einer radialen Dichtung kann eine entsprechende dichtende Gegenfläche an dem Luftfiltergehäuse angeordnet sein, wobei im Wesentlichen eine korrespondierende dichtende Anlagefläche zu dem gekrümmten Bereich 17 sowie den im Wesentlichen geraden Abschnitten 18 und 19 an einem unteren Teil eines Luftfiltergehäuses angeordnet sein kann, während eine korrespondierende Anlagefläche zu dem gekrümmten Abschnitt 16 auch an dem Deckel des Luftfiltergehäuses vorgesehen sein kann.

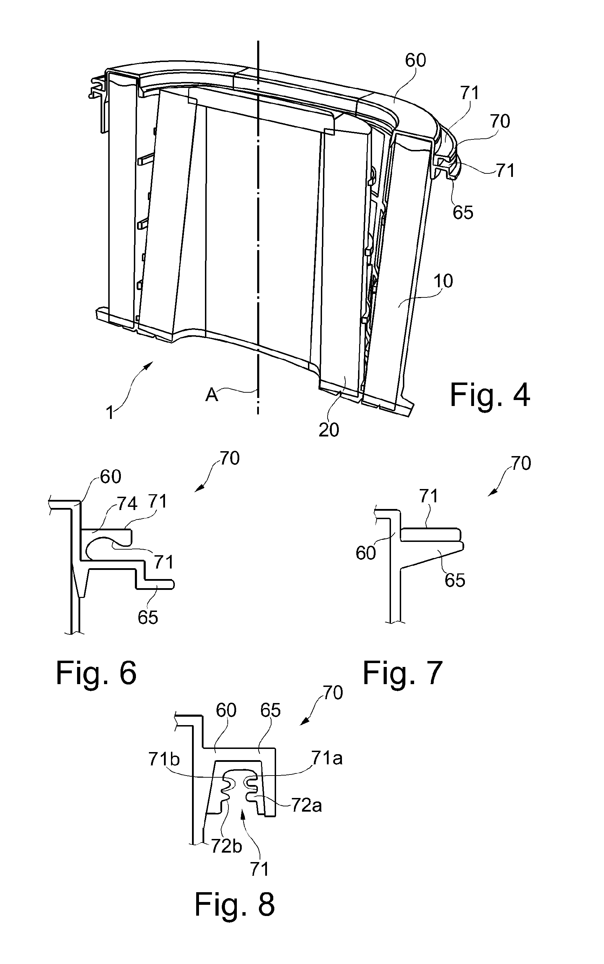

Figur 4 zeigt eine schematische Schnittansicht eines Filterelementes 1. Das in Figur 4 gezeigte Filterelement ist ein sogenannter Mehrfachbalgfilter, der einen äußeren Faltenbalg 10 sowie einen inneren Faltenbalg 20 aufweist. Der innere Faltenbalg 20 kann dabei gegenüber dem äußeren Faltenbalg 10 geneigt sein, sodass sich ein Anströmungskanal zwischen dem inneren Faltenbalg 20 und dem äußeren Faltenbalg 10 einstellt. In der hier gezeigten Ausführungsform ist das Filterelement 1 mit einer formwahrenden Schale 60 versehen, die in der hier gezeigten Ausführungsform den äußeren Faltenbalg 10 an einer Stirnfläche überdeckt und sich ferner teilweise über die Mantelfläche des äußeren Filterbalges erstreckt. Dabei muss die formwahrende Schale nicht zwangläufig über den gesamten äußeren Faltenbalg erstrecken, sondern kann ebenso auch sich radial nur teilweise über den äußeren Faltenbalg erstrecken, sodass gegebenenfalls eine vergrößerte Anströmfläche des Anströmkanales bzw. eines Abströmkanales (je nach Beströmungsrichtung) bereitgestellt werden kann. Ebenso kann eine derartige formwahrende Schale jedoch auch bei einem sogenannten Wickel- bzw. Flötenfilter vorgesehen sein, wobei dann eine Überdeckung der Anströmfläche im Regelfall relativ gering gehalten wird und eine Stabilisierung eher über die äußere Mantelfläche erreicht wird. In der hier gezeigten Ausführungsform weist die formwahrende Schale 60 eine Dichtungsanordnung 70 auf, die hier aus beispielsweise einer elastischen Lippe 74 bestehen kann, die über einem Kragen 65 angeordnet ist. Eine derartige Lippe kann sowohl für eine Abdichtung in axialer Richtung verwendet werden, wenn diese gegen eine entsprechende Auflagefläche an dem Luftfiltergehäuse gedrückt wird, jedoch ebenso für eine radiale Abdichtung, wenn beispielsweise ein entsprechender Vorsprung in den Zwischenraum zwischen der Dichtungsanordnung 70 der Lippe 74 und einen Kragen 65 der formwahrenden Schale 60 eingreift. Dies wird später mit Bezugnahme auf Figur 6 detailierter beschrieben.

Figur 5 zeigt eine weitere Dichtungsgeometrie, bei der eine Dichtungsanordnung 70 an einer bzw. in einer umlaufenden Nut eines Kragens 65 der formwahrenden Schale 60 angeordnet ist. In der in Figur 5 gezeigten Ausführungsform ist die Dichtungsanordnung 70 konkav ausgebildet und weist eine konkave Anlagefläche 71 auf. Entlang der Umfangsrichtung der Dichtungsanordnung 70 kann sich die Dichtungsanordnung von ihrem Profil her verändern, beispielsweise durch eingezogene radiale Stege 76. Diese können verhindern, dass ein Luftfilterelement 1 falschherum in ein Luftfiltergehäuse eingesetzt wird. Insbesondere verhindern derartige Stege 76 bzw. Unsymmetrien, dass das Filterelement eine derartige Position in dem Luftfiltergehäuse einnimmt, die dem Bediener den Eindruck vermitteln könnten, dass das Filterelement korrekt in das Luftfiltergehäuse eingesetzt wurde, obwohl dies tatsächlich nicht der Fall ist. Mit anderen Worten wird der Bediener durch eine unsymmetrische Ausgestaltung des Dichtungsprofiles in eine Umfangsrichtung unmittelbar feststellen können, dass das Filterelement keine ordnungsgemäße Position auf einer entsprechenden Gegendichtungsfläche eingenommen hat, und diesen Fehler unmittelbar bemerken und korrigieren können, bevor er die Brennkraftmaschine bzw. den Luftfilter wieder ordnungsgemäß in Betrieb nimmt.

Figur 6 zeigt eine mit Bezugnahme auf Figur 4 bereits erwähnte Dichtungsgeometrie, bei der die Dichtungsanordnung 70 in Form einer elastischen Lippe oberhalb eines Kragens 65 angeordnet ist. Diese elastische Lippe kann beispielsweise als eine Radialdichtung fungieren, wenn zwischen die Dichtlippe 74 und den Vorsprung 65 ein Steg eines Luftfiltergehäuses derart eingreift, dass die Anlagefläche 71 gegen den Steg des Luftfiltergehäuses dichtend anliegt. Ferner kann die in Figur 6 gezeigte Dichtungskonfiguration auch als eine axiale Abdichtung verwendet werden, wenn beispielsweise die Dichtungslippe 74 in axiale Richtung nachgiebig ausgestaltet ist und die außerhalb angeordneten Anlagefläche 71 gegen eine korrespondierende Anlagefläche 171 eines Luftfiltergehäuses 100 drückt.

Figur 7 zeigt eine im Vergleich dazu etwas einfachere Dichtungsgeometrie, die jedoch im Wesentlichen nur für eine axiale Anlage der Anlagefläche 71 gegen eine korrespondierende Anlagefläche des Luftfiltergehäuses ausgelegt ist. Auch hier ist ein Kragen 65 vorgesehen, der an der formwahrenden Schale 60 angeordnet ist, der die Dichtungsanordnung aufnimmt, die in der hier gezeigten Ausführungsform eine in axiale Richtung ausgerichtete Anlagefläche 71 aufweist. Der Kragen kann dabei radial nach außen verjüngend ausgestaltet sein, sodass sich eine stabile tragende Auflagefläche für die Dichtungsanordnung 70 ergibt.

Figur 8 zeigt eine weitere beispielhafte Ausführungsform einer Dichtungsanordnung, bei der sich die Dichtungsanordnung 70 beispielsweise in einer umlaufende in axiale Richtung geöffneten Nut eines Kragens 65 befindet. Dabei weist die in Figur 8 gezeigte Ausführungsform ferner an den Anlageflächen 71a und 71b einen rippenförmigen Vorsprung 72a, 72b auf. Obgleich in Figur 8 eine Mehrzahl von derartigen rippenförmigen Vorsprüngen gezeigt ist, kann dort auch eine geringere oder größere Anzahl von rippenförmigen Vorsprüngen vorgesehen sein. Diese rippenförmigen Vorsprünge können beispielsweise einen in axiale Richtung ausgerichteten Steg in einem Luftfiltergehäuse aufnehmen und festklemmen, sodass das Filterelement sicher in dem Luftfiltergehäuse gehalten wird, selbst wenn weitere haltende Einrichtungen, wie beispielsweise ein Luftfiltergehäusedeckel, entfernt wurden. Darüberhinaus stellen die Mehrzahl von Rippen 72a, 72b eine Mehrzahl von umlaufenden Dichtungsflächen dar, die eine zuverlässige Abdichtung einer Rohgasseite und einer Reingasseite in einem Luftfiltergehäuse gewährleisten.

Es sei verstanden, dass die mit Bezugnahme auf die Figuren 5, 6, 7 und 8 beschriebenen Dichtungskonfigurationen selbstverständlich auch miteinander kombiniert werden können, insbesondere bezogen auf Dichtungsanordnungen, die sich oberhalb eines Kragens 65 befinden und solchen, die sich unterhalb eines Kragens befinden. Auf diese Weise kann ein Filterelement bereitgestellt werden, dass einheitlich gefertigt werden kann und für unterschiedlichste Geometrien in einem Luftfiltergehäuse geeignet sein kann. Ferner sei verstanden, dass sich die Dichtungsanordnung nicht zwingend an der formwahrenden Schale 60 befinden muss, sondern darüberhinaus auch an einem separaten Dichtungsträger an dem Luftfiltergehäuse vorgesehen sein kann.

Figur 9 zeigt eine beispielhafte Ausführungsform eines Filterelementes 1, das hier in Form eines Mehrfachbalgfilters ausgestaltet ist. Dabei weist der in Figur 9 gezeigte Mehrfachbalgfilter einen äußeren Faltenbalg 10 sowie einen inneren Faltenbalg 20 auf, der radial innerhalb des äußeren Faltenbalges 10 angeordnet ist. Die Faltenbälge 10 und 20 sind in der in Figur 9 gezeigten Ausführungsform an einem zweiten axialen Ende 12, 22 mit einem Dichtungselement 52 fehlluftdicht verbunden, sodass an dieser Stelle eine zuverlässige Trennung zwischen Rohgasseite und Reingasseite ermöglicht wird. Ferner befindet sich in der in Figur 9 gezeigten Ausführungsform an einem ersten axialen Ende 11 des äußeren Faltenbalges 10 die formwahrende Schale 60 mit einer Dichtungsgeometrie. Neben den gekrümmten Abschnitten 16 sowie 17 (hier nicht gezeigt) und den im Wesentlichen geraden Abschnitten 18 und 19 des äußeren Faltenbalges 10 weist auch der innere Faltenbalg 20 einen gekrümmten Abschnitt 26 sowie im Wesentlichen gerade Abschnitte 28 und 29 auf. Die beiden geraden Abschnitte 28 und 29 sind durch ein Dichtungselement 51 derart fehlluftdicht abgedichtet, dass eine Reingasseite und eine Rohgasseite des Filterelementes 1 bzw. des Luftfiltergehäuses getrennt werden kann.

Obgleich die beiden im Wesentlichen geraden Abschnitte 18 und 19 in der in Figur 9 gezeigten Ausführungsform im Wesentlichen parallel ausgestaltet sind, können diese auch aufeinander zu verlaufen, sodass ein radiales Einfügen in eine Einführungsrichtung E bezüglich der Anlage der Anlageflächen 71 und 171 in einem Luftfiltergehäuse erleichtert werden kann. In diesem Fall wird jedoch die in Figur 9 gezeigt Dichtungsgeometrie, die im Wesentlichen der in Figur 8 gezeigten Geometrie entspricht, ersetzt werden durch eine Dichtungsgeometrie, die für eine radiale Abdichtung geeignet ist.

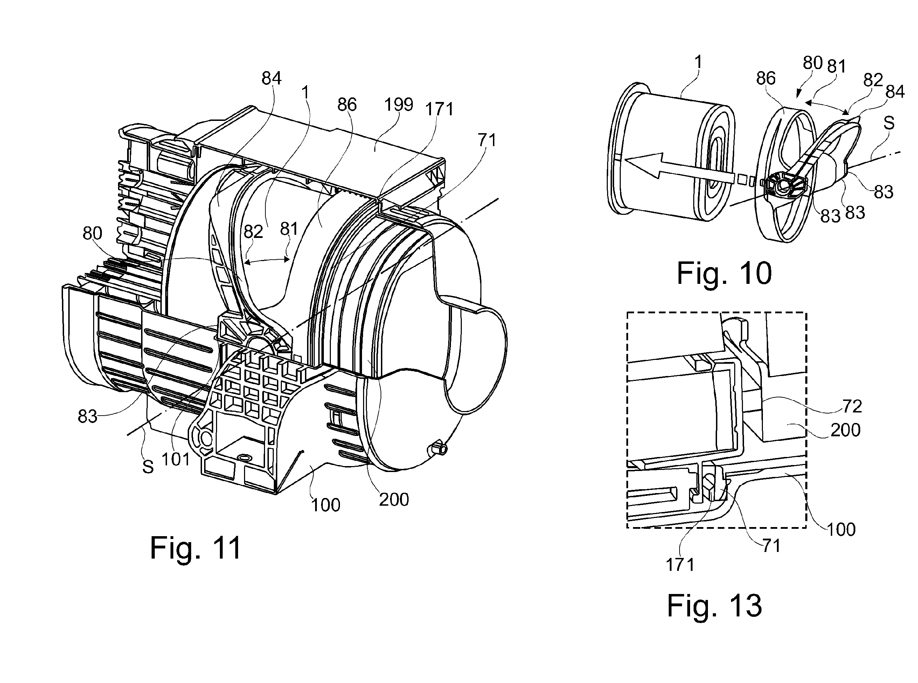

Figur 10 zeigt eine weitere beispielhafte Ausführungsform der Erfindung, bei der das Filterelement mit einer Kraftbeaufschlagungsvorrichtung 80 versehen ist. Diese Kraftbeaufschlagungsvorrichtung 80 weist eine erste Bewegungsposition 81 auf, in der ein Filterelement in ein Luftfiltergehäuse eingesetzt werden kann, und eine zweite Bewegungsposition 82, in der das Filterelement in dem Luftfiltergehäuse fixiert werden kann und eine entsprechende Kraft in axiale Richtung ausgeübt werden kann, sodass eine entsprechende Anlagefläche 71 eines Filterelementes an eine entsprechende Anlagefläche 171 eines Luftfiltergehäuses 100 angepresst wird. Dieses kann beispielsweise über eine Exzenteranordnung geschehen, die durch die Bewegung von der ersten Bewegungsposition 81 in die zweite Bewegungsposition 82 eine entsprechende Kraftanlagefläche 83 in eine axiale Richtung bewegt, sodass eine Kraftbeaufschlagung der Dichtungsanordnung erfolgt. Die Kraftbeaufschlagungsvorrichtung kann dabei um eine Schwenkachse S geschwenkt werden, um die sich auch die Exzenteranordnung drehen kann. Ferner kann die Kraftbeaufschlagungsvorrichtung einen Griff 84 aufweisen, der in der zweiten Bewegungsposition 82 an der äußeren Mantelfläche des Filterelementes 1 anliegt, sodass er im Wesentlichen radial nicht von dem Filterelement absteht, während der Griff 84 in einer ersten Bewegungsposition 81 derart von dem Filterelement 1 beabstandet ist, dass der Griff beispielsweise von einer Bedienperson auch mit Handschuhen ohne Probleme entnommen werden kann. Die Kraftbeaufschlagungsvorrichtung kann darüberhinaus einen Kragen aufweisen, an dem die Kraftbeaufschlagungsvorrichtung 80 drehbar um die Schwenkachse S gelagert ist, wobei dieser Kragen 86 als Haltekragen für das Filterelement 1 dienen kann. Insbesondere kann der Kragen für eine gleichmäßige Kraftverteilung entlang des Dichtungsumfanges dienen, insbesondere wenn eine Kraftbeaufschlagung und eine Kraftwirkung gegenüber dem Luftfiltergehäuse nur punktuell über entsprechende Kraftanlageflächen 83 erfolgt. Die Kraftbeaufschlagungsvorrichtung 80 bzw. der Kragen 86 können lösbar und austauchbar am Filterelement befestigt sein. Insbesondere kann an dem Kragen auch die gesamte Dichtungsgeometrie vorgesehen sein, um zum einen das Filterelement 1 gegenüber dem Luftfiltergehäuse 100 und ggf. ein nachgeschaltetes Sicherheitsfilterelement 200 gegenüber dem Filterelement 1 bzw. dem Luftfiltergehäuse 100 abzudichten. Dies kann etwa dadurch erreicht werden, dass das Luftfiltergehäuse 100, das nachgeschaltete Sicherheitsfilterelement 200 und das Filterelement 1 umlaufende Dichtungsanlageflächen aufweisen, die in einer radiale Richtung nebeneinander liegen, während der Kragen eine umlaufende Dichtungsfläche aufweist, die in radialer Richtung gegenüber sowohl dem Luftfiltergehäuse 100, als auch dem Sicherheitsfilterelement 200 als auch dem Filterelement 1 abdichtet. Die jeweiligen Dichtungsflächen können dabei in einer Ebene liegen, jedoch auch geneigt oder gestuft sein. So bedarf es nur eines einzigen elastischen Dichtungselementes zur Abdichtung sämtlicher Komponenten gegeneinander, insbesondere, wenn das Dichtungselement an dem Kragen 86 elastisch ausgebildet ist.

Figur 11 zeigt eine Ansicht, in der das Filterelement 1 in ein Luftfiltergehäuse 100 eingesetzt ist und das Luftfiltergehäuse mit einem Luftfiltergehäusedeckel 199 verschlossen ist. In dieser eingebauten Position befindet sich die Kraftbeaufschlagungsvorrichtung 80 in einer zweiten Bewegungsposition 82, in der die Kraftanlageflächen 83 des Filterelementes 1 gegen eine korrespondierende Anlagefläche 101 des Luftfiltergehäuses gedrückt wird. Dabei liegt der Griff 84 der Kraftbeaufschlagungsvorrichtung an der Mantelfläche des Filterelementes 1 platzsparend an, sodass der Deckel des Luftfiltergehäuses 199 verschlossen werden kann. Zur Entnahme des Filterelementes 1 wird der Gehäusedeckel 199 des Luftfiltergehäuses 100 entfernt und mittels des Griffes 84 die Kraftbeaufschlagungsvorrichtung 80 in eine erste Bewegungsposition 81 bewegt, wodurch der Griff 84 weiter von der Mantelfläche des Filterelementes beabstandet ist, sodass der Griff 84 hintergriffen werden kann und das Filterelement dem Gehäuse 100 entnommen werden kann. In der ersten Bewegungsposition 81 wird die Kraftbeaufschlagung zwischen der Kraftanlagefläche 83 und der korrespondierenden Anlagefläche 101 des Luftfiltergehäuses 100 gelöst und somit das Filterelement 1 und damit seine Anlagefläche 71 von der Anlagefläche 171 des Luftfiltergehäuses gelöst.

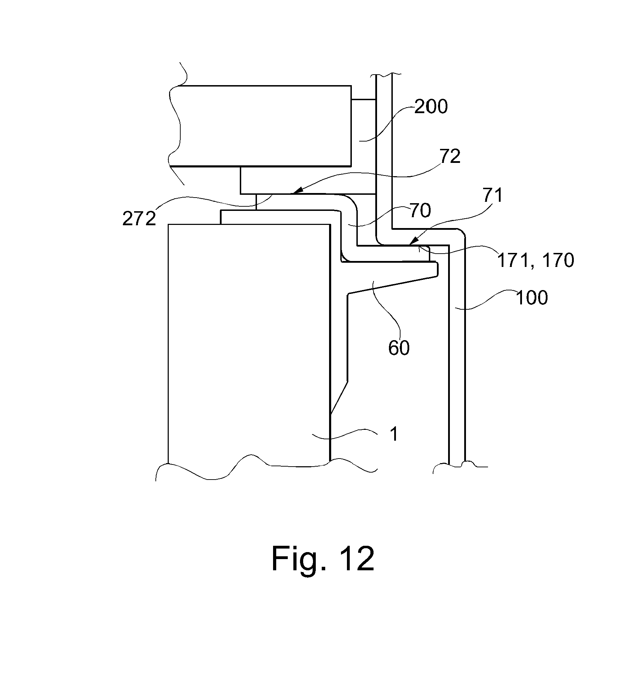

Figur 12 zeigt eine weitere beispielhafte Ausführungsform einer Dichtungskonfiguration, bei der die Dichtungsanordnung 70 mit einer ersten Anlagefläche 71 und einer zweiten Anlagefläche 72 versehen ist. Die erste Anlagefläche ist ausgelegt, um an einer Anlagefläche 171 einer Dichtungsanordnung 170 eines Luftfiltergehäuses anzuliegen. Darüberhinaus ist die zweite Anlagefläche 72 ausgelegt, um an einer korrespondierende Anlagefläche 272 eines Sicherheitselementes 200 anzuliegen, sodass mit der Dichtungsanordnung 70 mit den beiden Anlageflächen 71 und 72 nicht nur eine Abdichtung eines Filterelementes 1 gegenüber einem Luftfiltergehäuse 100 erreicht werden kann, sondern darüberhinaus auch eine fehlluftdichte Abdichtung des Filterelementes 100 gegenüber einem Sicherheitselement bzw. Sicherheitsfilterelement 200. Ein Sicherheitselement wird häufig vorgesehen, um bei einem eventuellen Defekt eines Filterelementes 1 Staubpartikel noch auffangen zu können, bevor diese in den Verbrennungstrakt einer Brennkraftmaschine gelangen können. Dies kann beispielsweise der Fall sein, wenn das Hauptelement vorübergehend aus dem Filtergehäuse entfernt wird, um zu verhindern, dass beim Wechsel des Hauptelementes Staubpartikel in den Motor, insbesondere in den Verbrennungsraum eindringen. Dabei kann die Dichtungsanordnung 70 so ausgestaltet sein, dass die Anlageflächen 71 und 72 integral in einem Element ausgebildet werden, beispielsweise in einem zusammenhängenden Dichtungsprofil.

Figur 13 veranschaulicht eine derartige Geometrie mit einer in Figur 6 beschriebenen Dichtungsanordnung, bei der eine axial Abdichtung des Filterelementes 1 gegenüber einem Luftfiltergehäuse 100 über die korrespondierenden Anlageflächen 71, 171 erfolgt.

Es sei angemerkt, dass der Begriff "umfassen" weitere Elemente nicht ausschließt, ebenso wie der Begriff "ein" und "eine" mehrere Elemente und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

## Patentansprüche

1. Filterelement für einen Luftfilter einer Brennkraftmaschine, wobei das Filterelement eine Ausdehnung in eine im Wesentlichen axiale Ausdehnungsrichtung (A) und eine Ausdehnung in eine im Wesentlichen dazu orthogonal verlaufende Ebene in radialer Ausdehnungsrichtung aufweist, und das Filterelement aufweist:
ein Filtermedium mit einer Rohgasseite und einer Reingasseite,
wobei das Filterelement (1) eine Dichtungsanordnung (70) aufweist mit einer ersten Anlagefläche (71), die ausgelegt ist zur fehlluftundurchlässigen Trennung der Reingasseite von der Rohgasseite bezüglich einer Luftfiltergehäusewand,
wobei die erste Anlagefläche (71) umlaufend ist und eine Geometrie aufweist, die eine einen Fehleinbau verhindernde Unsymmetrie bezüglich der axialen Ausdehnungsrichtung (A) aufweist.

2. Filterelement nach Anspruch 1, wobei die erste Anlagefläche (71) in einer Fläche angeordnet ist, deren Abstand zu einer Ebene einer Einbaurichtung in der Einbaurichtung (E) monoton zunimmt.

3. Filterelement nach einem der Ansprüche 1 und 2, wobei die Dichtungsanordnung (70) in einer gekrümmten Fläche verläuft.

4. Filterelement nach einem der Ansprüche 1 bis 3, wobei die Dichtungsgeometrie (70) ein in einer Umlaufrichtung verändertes Profil aufweist.

5. Filterelement nach einem der Ansprüche 1 bis 4, wobei sich die Dichtungsanordnung (70) in einem der Abströmseite zugewandten Bereich des Filterelementes (1) befindet.

6. Filterelement nach einem der Ansprüche 1 bis 5, wobei das Filterelement (1) in einer Ebene der radialen Ausdehnungsrichtung einen ersten im wesentlichen geraden Abschnitt (18) und einen zweiten im wesentlichen geraden Abschnitt (19) aufweist, wobei der erste im Wesentlichen gerade Abschnitt (18) und der zweite im Wesentlichen gerade Abschnitt (19) in der Ebene einer radialen Ausdehnungsrichtung aufeinander zulaufen.

7. Filterelement nach einem der Ansprüche 1 bis 6, wobei das Filterelement (1) ferner eine formwahrende Schale (60) aufweist, die sich wenigstens teilweise in der Ebene der radialen Ausdehnungsrichtung über die abströmseitige Stirnfläche des Filterelementes erstreckt und sich wenigstens teilweise in axialer Richtung (A) über die äußere Mantelfläche des Filterelementes (1) erstreckt.

8. Filterelement nach Anspruch 7, wobei die Dichtungsanordnung (70) an der formwahrenden Schale (60) vorgesehen ist.

9. Filterelement nach einem der Ansprüche 1 bis 8, wobei die erste Anlagefläche (71) der Dichtungsanordnung (70) elastisch verformbar.

10. Filterelement nach einem der Ansprüche 1 bis 9, wobei die erste Anlagefläche (71) ein konkaves Dichtungsprofil mit gegenüberliegenden Seiten (71a, 71b) aufweist.

11. Filterelement nach Anspruch 10, wobei wenigstens eine der gegenüberliegenden Seiten (71a, 71 b) wenigstens eine vorstehende Rippe (72a, 72b) in Umlaufrichtung aufweist.

12. Filterelement nach einem der Ansprüche 1 bis 11, wobei eine Andruckrichtung der ersten Anlagefläche (71) im Wesentlichen senkrecht zu einer Einbaurichtung (E) verläuft, in der das Filterelement (1) in ein Filtergehäuse einbaubar ist.

13. Filterelement nach einem der Ansprüche 1 bis 12, wobei das Filterelement (1) eine bezüglich des Filterelementes von einer ersten Bewegungsposition (81) in eine zweite Bewegungsposition (82) verbringbare Kraftbeaufschlagungsvorrichtung (80) aufweist, wobei die Kraftbeaufschlagungsvorrichtung in der ersten Bewegungsposition (81) derart ausgelegt ist, dass sie ein Einführen des Filterelementes (1) in ein Filtergehäuse erlaubt, und die Kraftbeaufschlagungsvorrichtung (80) in der zweiten Bewegungsposition (82) derart ausgelegt ist, dass sie abgestützt gegen ein Luftfiltergehäuse eine Kraftbeaufschlagung der Dichtungsanordnung (70) des Filterelementes (1) auf eine Dichtungsanordnung eines Luftfiltergehäuses hervorruft.

14. Filterelement nach Anspruch 13, wobei die Kraftbeaufschlagungsvorrichtung (80) schwenkbar um eine Schwenkachse (S) an dem Filterelement (1) befestigt ist und eine Fläche (83) zur Kraftbeaufschlagung gegen ein Filtergehäuse aufweist, wobei die Fläche (83) zur Kraftbeaufschlagung bei einer Schwenkbewegung eine exzentrische Bewegung bezüglich der Schwenkachse (S) vollzieht.

15. Filterelement nach einem der Ansprüche 13 und 14, wobei die Kraftbeaufschlagungsvorrichtung (80) einen Handgriff (84) aufweist, der ausgelegt ist, um die Kraftbeaufschlagungsvorrichtung (80) von der ersten Bewegungsposition (81) in die zweite Bewegungsposition (82) und umgekehrt zu bewegen, wobei der Handgriff (84) in der ersten Bewegungsposition (81) als Griff zum Einbau bzw. Ausbau des Filterelementes (1) in bzw. aus einem Filtergehäuse ausgelegt ist.

16. Filterelement nach einem der Ansprüche 1 bis15, wobei die Dichtungsanordnung (70) eine zweite Anlagefläche (72) aufweist, die ausgelegt ist zur fehlluftundurchlässigen Trennung der Reingasseite des Filterelementes (1) und einer Rohgasseite eines dem Filterelement (1) nachschaltbaren Sicherheitselementes.

17. Filterelement nach Anspruch 16, wobei die zweite Anlagefläche (72) elastisch ausgebildet ist und die erste Anlagefläche (71) und die zweite Anlagefläche (72) ein einem integralen Element ausgebildet sind.

18. Luftfilter für eine Brennkraftmaschine, mit einem Filterelement (1) nach einem der Ansprüche 1 bis 16 und einem Luftfiltergehäuse (100), wobei das Luftfiltergehäuse (100) eine zu der Dichtungsanordnung (70) des Filterelementes (1) korrespondierende Dichtungsanordnung (170) mit einer ersten Anlagefläche (171) aufweist.

19. Luftfilter für eine Brennkraftmaschine nach Anspruch 18, wobei das Luftfiltergehäuse (100) eine Kraftaufnahmefläche (183) für die Fläche (83) zur Kraftbeaufschlagung der Kraftbeaufschlagungsvorrichtung (80) des Filterelementes (1) derart aufweist, dass eine Kraft durch eine gegen die Kraftaufnahmefläche (183) des Filtergehäuses (1) ausgeübte Kraftbeaufschlagung der Dichtungsanordnung (70) aufnehmbar ist.
